Europäisches Patentamt

(19) European Patent Office

Office européen des brevets

(11) Veröffentlichungsnummer: **0 037 915**
**A1**

(12) # EUROPÄISCHE PATENTANMELDUNG

(21) Anmeldenummer: 81102036.1

(22) Anmeldetag: 19.03.81

(51) Int. Cl.³: **C 03 B 9/40, C 03 B 9/14, C 03 B 9/18, C 03 B 9/195**

(30) Priorität: 29.03.80 DE 3012351

(43) Veröffentlichungstag der Anmeldung: 21.10.81
Patentblatt 81/42

(84) Benannte Vertragsstaaten: **AT BE CH FR GB IT LI NL SE**

(71) Anmelder: **VEBA-GLAS Aktiengesellschaft, Ruhrglasstrasse 50, D-4300 Essen 12 (DE)**

(72) Erfinder: **Knoth, Werner-Dieter, Ing., Byfangerstrasse 175, D-4300 Essen 15 (DE)**
Erfinder: **Hoenselaars, Bernd, Timpestrasse 70, D-4300 Essen 12 (DE)**
Erfinder: **Wenzel, Horst, Barkenberger Allee 94, D-4270 Dorsten 11 (DE)**
Erfinder: **Letmathe, Helmut, Ing., An den Friedhöfen 45, D-4300 Essen 15 (DE)**
Erfinder: **Schommartz, Peter, Ing., Knappenstiege 19, D-4300 Essen 16 (DE)**

(74) Vertreter: **Spalthoff, Adolf, Dipl.-Ing., Pelmanstrasse 31 P.O. Box 34 02 20, D-4300 Essen 1 (DE)**

(54) **Vorrichtung zur Herstellung von Hohlglasartikeln.**

(57) Die Erfindung betrifft eine Vorrichtung zur Herstellung von Hohlglasartikeln, bei welcher ein Glastropfen in eine Vorform gegeben wird, in welcher dieser zum Külbel vorgeblasen oder verpreßt wird und anschließend das Külbel in eine Fertigform übergeben, in dieser fertiggeblasen und danach aus dieser entfernt wird, wobei einer Vorform zwei oder mehrere Fertigformen zugeordnet sind, welch letztere auf einem Drehteller od.dgl. angeordnet sind. Der Erfindung liegt die Aufgabe zugrunde, vorgenannte Vorrichtung hinsichtlich ihrer Leistung weiter zu verbessern. Erfindungsgemäß wird dies dadurch erreicht, daß der Antrieb der mechanisch bewegten Teile hydraulisch erfolgt. Als Antriebssysteme finden Zylinder-Kolben-Einheiten, Drehkolben od.dgl. Verwendung. Das hydraulische Mittel ist schwer entflammbar oder unbrennbar. In den hydraulischen Kreis ist bzw. sind eine oder mehrere Temperaturkompensatoren eingeschaltet. Die Steuerung der Antriebe erfolgt durch mechanisch und/oder hydraulisch und/oder elektrisch betätigte Ventile.

# Dipl.-Ing. A. Spalthoff
Patentanwalt

D-43 Essen 1, den 16. 3. 1981
Pelmanstraße 31
Postschließfach 34 02 20
Telefon (0201) 77 20 08

Akten-Nr. 23 946 F.
In der Antwort bitte angeben

0037915

— 1 —

VEBA-GLAS AG
4300 Essen 12

"Vorrichtung zur Herstellung von Hohlglasartikeln"

Die Erfindung betrifft eine Vorrichtung zur Herstellung
von Hohlglasartikeln, bei welcher ein Glastropfen in eine
Vorform gegeben wird, in welcher dieser zum Külbel vorgeblasen oder gepreßt wird und anschließend das Külbel in eine
Fertigform übergeben, in dieser fertiggeblasen und danach
aus dieser entfernt wird, wobei einer Vorform zwei oder
mehrere Fertigformen zugeordnet sind, die auf einem Drehteller od.dgl. angeordnet sind.

Es sind Vorrichtungen zur Herstellung von Hohlglasartikeln
seit langem bekannt, welche als sog. IS-Maschinen bezeichnet
sind. Das wesentliche Merkmal dieser bekannten Maschinen
besteht darin, daß in jeder Fertigungsstation gleichzeitig,
aber zeitlich versetzt, der gleiche Produktionsprozeß abläuft. Der Ablauf des Herstellungsprozesses für Hohlglasartikel erfolgt in der Weise, daß flüssige Glastropfen jeweils in eine metallische Vorform der einzelnen Stationen zu
einem Rohling, dem sog. Külbel, verpreßt oder ausgeblasen
werden. Nach Übergabe der jeweiligen Rohlinge in den einzelnen Vorformen zugeordnete Fertigformen werden die Rohlinge
in diesen durch weiteres Ausblasen oder Evakuieren ihrer
äußeren Umgebung zu den fertigen Artikeln umgeformt. Dabei sind im Vorformkomplex üblicherweise ein, zwei oder
drei Formen aneinandergebündelt als Ein-, Zwei- oder
Dreifachformen. Eine gleiche Bündelung findet sich dann
im Fertigformkomplex jeweils einer Fertigungsstation einer
IS-Maschine. Die anderen Stationen dieser Maschine sind
analog aufgebaut.

Nach der Lehre eines älteren Vorschlages ist jeder
Fertigformkomplex pro Vorformstation doppelt oder mehrfach vorhanden und auf einem gemeinsamen Drehteller angeordnet. Bei doppelt vorhandenen Fertigformen sind diese
jeweils um 180° versetzt voneinander angebracht. Je nach
Stellung des Drehtellers wird dann entweder der eine oder
aber der andere Fertigformkomplex zur Füllung mit dem bzw.
den Rohlingen oder zur Entnahme des bzw. der fertig ausgebildeten Hohlglaskörper eingesetzt. Das Ausblasen oder
Evakuieren geschieht in der Weise, daß in der Entnahmelage des Fertigformkomplexes, d.h. also, nach dem das
Schwenken um 180° von der Aufnahmeposition der Rohlinge durchgeführt ist, durch Aufsetzen eines oder mehrere Köpfe auf die
einzelnen Fertigformen.

Es ist bekannt, die Maschinenteile, die das Vorprodukt
(Külbel) oder den fertigen Artikel transportieren sowie die
sonstigen, sich bewegenden Teile dieser Maschinen, durch
Preßluft anzutreiben. Dies hat seinen Grund in der vergleichsweise gefahrlosen Handhabung der Preßluft, deren einfacher Zuführung durch flexible Schläuche und im
Falle von Leckagen des unproblematischen Ausströmens des
pneumatischen Antriebsmittels. Diese pneumatische
Antriebstechnik reicht aus für normale IS-Maschinen,
deren Formen ortsfest angeordnet sind, so daß nur vergleichsweise leichte Massen in Bewegung gesetzt bzw.
abgebremst werden müssen.

Nach der Lehre eines älteren Vorschlages sind jedoch
zur Erzielung einer hohen Durchsatzleistung vergleichsweise große Massen zu bewegen bzw. abzubremsen, wobei
sich die Kompressibilität des pneumatischen Antriebsmittels als nachteilig erweist, da dieses eine Federwirkung zuläßt, welche sich zeitverzögernd auf die
einzelnen Anfangs- und Endpunkte jeder Bewegung auswirkt.
Darüber hinaus ist besonders bei großen bewegten Massen
mit ihren Trägheiten der Aufbau des Druckes und die Ingangsetzung der Umformung in mechanische Bewegung mit einem
höheren Zeitaufwand verbunden. Im ungünstigen Falle von
Resonanzen zwischen dem Antriebsmittel Druckluft und den
apparativen Dimensionen können Schwingungen der sich bewegenden Teile auftreten. Um die vorerwähnten schwingenden
Bewegungen zu vermeiden, ist es bereits vorgeschlagen
worden, Dämpfungslieder verschiedener Ausführung zu verwenden. Diese bringen aber den Nachteil einer Begrenzung
der Beschleunigung mit sich sowie die Unmöglichkeit, höhere
Fertigungsgeschwindigkeiten zu erzielen.

Von diesem Stand der Technik ausgehend liegt der Erfindung
die Aufgabe zugrunde, die Vorrichtung nach einem älteren
Vorschlage hinsichtlich ihrer Leistung weiter zu verbessern.

Gemäß der Erfindung wird dies dadurch erreicht, daß der Antrieb der mechanisch bewegten Teile hydraulisch erfolgt.
Auf diese Weise ergibt sich eine außerordentliche
Präzision im Bewegungsablauf, hohe Beschleunigungen im
Anlauf und kurze Bremswege beim Anhalten der bewegten Teile.
Eine Dämpfung mit einer Vernichtung der Energie ist nicht
mehr erforderlich, woraus sich die Möglichkeit weiterer,
auch energiesparender Geschwindigkeitssteigerungen bei
den Bewegungsabläufen ergibt.

Als Antriebssysteme können Zylinder-Kolben-Einheiten, Drehkolben od.dgl. Verwendung finden. Die Bewegungen der Antriebssysteme werden über Zahnstangen, Spindeln usw. unmittelbar oder unter Zwischenschaltung eines Getriebes
auf die zu bewegenden Teile der Vorrichtung übertragen.

Der Druckbereich des hydraulischen Mittels liegt vorteilhaft zwischen 0,02 und 200 bar.

Zur Konstanthaltung der Viskosität des hydraulischen
Mittels, die in die Präzision und Toleranz aller Bewegungsabläufe unmittelbar eingreift, kann oder können Kompensatoren eingesetzt werden. Im Falle einer Wärmeabhängigkeit der Viskosität besteht dieser Kompensator z.B. aus
einem Wärmetauscher, der das Antriebsmittel auf einer
konstanten Temperatur hält.

Gemäß einem weiteren Merkmal der Erfindung findet bei solchen
Maschinen, die den hohen Temperaturen bei der Glasverarbeitung
unmittelbar ausgesetzt sind, ein schwerentflammbares oder
unbrennbares hydraulisches Mittel Verwendung. Für den Fall
von Leckagen ist somit eine maximale Brandsicherheit gegeben.

Bei Mehrstationen-Produktionsmaschinen wird nach einem weiteren Vorschlage der Erfindung der hydraulische Kreis
in Teilkreise unterteilt, z.B. pro Station einer derartigen Maschine. In diesem Falle hat jede einzelne
Station eine eigene Antriebs- und Steuereinheit. Damit
ergibt sich im Falle etwaiger Störungen mit der Folge
eines Stillstandes eine Unabhängigkeit von der Arbeitsweise der Nachbarstationen.

Die Steuerung des hydraulischen Mittels erfolgt durch
mechanisch und/oder hydraulisch und/oder elektrisch betätigte Ventile. Alle diese hydraulischen Antriebssysteme
werden vorzugsweise unterhalb der Arbeitsfläche, auf der
mit flüssigem Glas bei hohen Temperaturen gearbeitet wird,
angeordnet. Das hydraulische Treibmittel, z.B. Öl, wird
mittels einer Pumpe unter Druck gehalten. Die Strömungsfreigabe erfolgt durch die den einzelnen Antriebssystemen
zugeordneten Ventile.

PATENTANSPRÜCHE :

1. Vorrichtung zur Herstellung von Hohlglasartikeln,
bei welcher ein Glastropfen in eine Vorform gegeben wird,
in welcher dieser zum Külbel vorgeblasen oder verpreßt
wird und anschließend das Külbel in eine Fertigform übergeben, in dieser fertiggeblasen und danach aus dieser
entfernt wird, wobei einer Vorform zwei oder mehrere
Fertigformen zugeordnet sind, welch letztere auf einem
Drehteller od.dgl. angeordnet sind, dadurch gekennzeichnet,
daß der Antrieb der mechanisch bewegten Teile hydraulisch
erfolgt.

2. Vorrichtung nach Anspruch 1, dadurch gekennzeichnet,
daß als Antriebssysteme Zylinder-Kolben-Einheiten, Drehkolben od.dgl. Verwendung finden.

3. Vorrichtung nach Anspruch 1 und/oder 2, dadurch gekennzeichnet, daß der Druck des hydraulischen Mittels im Bereich
von 0,02 - 200 bar liegt.

4. Vorrichtung nach Anspruch 1 und/oder einem oder mehreren
der folgenden, dadurch gekennzeichnet, daß in den hydraulischen Kreis eine oder mehrere Temperaturkompensatoren
eingeschaltet ist bzw. sind.

5. Vorrichtung nach Anspruch 1 und/oder einem oder mehreren
der folgenden, dadurch gekennzeichnet, daß das hydraulische
Mittel schwer entflammbar oder unbrennbar ist.

6. Vorrichtung nach Anspruch 1 und/oder einem oder mehreren

der folgenden, <u>dadurch gekennzeichnet</u>, daß der hydraulische Kreis in Teilkreise unterteilt ist.

7. Vorrichtung nach Anspruch 1 und/oder einem oder mehreren der folgenden, <u>dadurch gekennzeichnet</u>, daß die Steuerung der Antriebssysteme durch mechanisch und/oder hydraulisch und/oder elektrisch betätigte Ventile erfolgt.

8. Vorrichtung nach Anspruch 1 und/oder einem oder mehreren der folgenden, <u>dadurch gekennzeichnet</u>, daß die Antriebssysteme, ihre Zu- und Ableitungen sowie ihre Ventile unterhalb der Arbeitsfläche der Vorrichtung angeordnet sind.

**Europäisches Patentamt**

**EUROPÄISCHER RECHERCHENBERICHT**

0037915

Nummer der Anmeldung

EP 81 10 2036

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 445 218 (TRUDEAU)<br>* Insgesamt *<br>--- | 1,2,7 |
| X | US - A - 3 888 651 (JAMES)<br>* Insgesamt *<br>--- | 1,2 |
| X | US - A - 3 060 707 (HAMILTON)<br>* Insgesamt *<br>--- | 1,2,7 |
| X | US - A - 2 874 516 (YOUKERS)<br>* Insgesamt *<br>--- | 1,2,7,8 |
|  | W. GIEGERICH et al.: GLASMASCHINEN<br>Springer-Verlag, 1964,<br>BERLIN (DE)<br>E. SCHULZE: "Lynch-44-Maschine",<br>Seiten 306 bis 312<br><br>* Insgesamt *<br>--- | 1,2 |
| X | US - A - 3 009 444 (MENNITT)<br>* Insgesamt *<br>--- | 1,2 |
| A | US - A - 2 238 803 (BERTHOLD) | 1 |
| A | US - A - 1 878 521 (INGLE) | 1 |
| A | DE - C - 478 498 (HARTFORD-EMPIRE) | 1 |
| A | US - A - 1 911 119 (INGLE) | 1 |
| A | US - A - 2 565 749 (ZAPPIA) | 1 |

----------

**KLASSIFIKATION DER ANMELDUNG (Int. Cl. )**

C 03 B 9/40
     9/14
     9/18
     9/195

**RECHERCHIERTE SACHGEBIETE (Int. Cl. 3)**

C 03 B 9/14
     9/16
     9/18
     9/19
     9/193
     9/195
     9/40

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23.06.1981 | VAN DEN BOSSCHE |

EPA form 1503.1  06.78